# EUROPEAN PATENT SPECIFICATION

(11) **EP 2 387 197 B1**
(45) Date of publication and mention of the grant of the patent: **12.06.2019**
(21) Application number: 09837330.1
(22) Date of filing: 22.10.2009
(51) Int. Cl.: H04L 29/06, H04M 7/12

(54) **METHOD, SYSTEM, AND MEDIA GATEWAY FOR REPORTING DUAL TONE MULTI-FREQUENCY DIGITS**
VERFAHREN, SYSTEM UND MEDIA GATEWAY ZUM MELDEN VON MEHRFREQUENZDOPPELTON-ZIFFERN
PROCÉDÉ, SYSTÈME ET PASSERELLE MULTIMÉDIA POUR RENDRE COMPTE DE CHIFFRES DOUBLE TONALITÉ MULTIFRÉQUENCES

(30) Priority: 09.01.2009 CN 200910076174
(43) Date of publication of application: 16.11.2011
(73) Proprietor: Huawei Technologies Co., Ltd., Longgang District Shenzhen, Guangdong 518129 (CN)
(72) Inventor: ZHU, Ning, Shenzhen Guangdong 518129 (CN); YANG, Weiwei, Shenzhen Guangdong 518129 (CN)
(74) Representative: Thun, Clemens
(86) International application number: PCT/CN2009/074563
(87) International publication number: WO 2010/078773

(56) References cited:
- EP-A1- 2 043 339
- WO-A1-2005/032164
- WO-A1-2006/111091
- WO-A1-2008/003247
- CN-A- 1 725 716
- CN-A- 1 878 324
- 'Gateway control protocol: Version 3' ITU-T RECOMMENDATION H.248.1 01 October 2005,

## Description

### FIELD OF THE INVENTION

The present invention relates to communications technologies, and in particular, to a method, system, and media gateway for reporting a Dual Tone Multi-Frequency (DTMF) digit.

### BACKGROUND OF THE INVENTION

A Media Gateway Controller (MGC) and a Media Gateway (MG) are two important network devices in a packet network where services are separated from bearers. Under the control of the MGC, the MG can perform specified operations on media data received from another device.

In a media service application, the MGC can control the MG to enable a user to perform, through DTMF keys, interactive operations on media data. The DTMF keys correspond to two types of DTMF digit, one type is a control DTMF digit and the other type is a collected DTMF digit. For example, a user can play, pause, fast forward, or rewind media data through the control DTMF digit corresponding to the DTMF keys. The user can also enter some digit information through the collected DTMF digit corresponding to the DTMF keys.

In the prior art, when the MGC controls the MG to enable a user to perform interactive operations on media data through the DTMF digit, the MG can only report detected the DTMF digit to the MGC and therefore the MGC cannot perform correct interactive operations according to the DTMF digit reported by the MG. This restricts the application scope of media services.

WO 2008/003247 discloses a method, device and system implementing multimedia recording. WO 2005/032164 discloses an intelligent multimedia calls. "Gateway control protocol: Version 3" discloses a method to control the Media Gateway to enable a user to perform interactive operations on media data through the DTMF digit. Both of them do not disclose the technical solution of the present application.

### SUMMARY OF THE INVENTION

Embodiments of the present invention provide a method, a system, and an MG for reporting a DTMF digit, so that the MG can report a detected control DTMF digit and/or a collected DTMF digit to an MGC. The MGC can thereby perform correct interactive operations according to the control DTMF digit and/or collected DTMF digit reported by the MG. The application scope of media services is therefore extended.

An embodiment of the present invention provides a method for reporting a DTMF digit. The method includes:
detecting, by a Media Gateway, MG, according to a set first DTMF digit detection event, a control DTMF digit received in a control phase, wherein the set first DTMF digit detection event is set by a Media Gateway Controller, MGC , for the MG; and
reporting, by the MG, the first DTMF digit detection event when the control DTMF digit is detected; wherein the reported first DTMF digit detection event to the MGC carries the control DTMF digit;
wherein a value of an event parameter named "Type" carried in the set first DTMF digit detection event being "cont" indicates that the MG should report the control DTMF digit detected in the control phase, a value of an event parameter named "Type" carried in the reported first DTMF digit detection event being "cont" indicates that the control DTMF digit is detected in the control phase.

An embodiment of the present invention provides an MG. The MG includes:
a first detecting module, adapted to detect, according to a set first DTMF digit detection event, a control DTMF digit received in a control phase, wherein the set first DTMF digit detection event is set by a Media Gateway Controller, MGC , for the MG; and
a first reporting module, adapted to report the first DTMF digit detection event to the MGC when the control DTMF digit is detected, wherein the reported first DTMF digit detection event carries the control DTMF digit;
wherein a value of an event parameter named "Type" carried in the set first DTMF digit detection event being "cont" indicates that the MG should report the control DTMF digit detected in the control phase, a value of an event parameter named "Type" carried in the reported first DTMF digit detection event being "cont" indicates that the control DTMF digit is detected in the control phase.

An embodiment of the present invention provides a system for reporting a DTMF digit. The system includes a MG as described above and a MGC.

In the above technical solution, the MG reports detected the control DTMF digit to the MGC through the set first DTMF digit detection event, reports detected the collected DTMF digit to the MGC through the set second DTMF digit detection event, and reports detected the control DTMF digit or the collected DTMF digit to the MGC through the set third DTMF digit detection event. Therefore, the MG can detect the control DTMF digit and/or the collected DTMF digit and report the detected control DTMF digit and/or collected DTMF digit to the MGC during interactive operations on media data. The MGC can thereby perform correct interactive operations according to the control DTMF digit and/or collected DTMF digit reported by the MG. The application scope of media services is therefore extended. The scope of the invention is defined in the appended set of claims.

### BRIEF DESCRIPTION OF THE DRAWINGS

To better explain the technical solution of the present invention or the prior art, the accompanying drawings required in the description of the embodiments of the present invention or the prior art are briefly described. It is apparent that the accompanying drawings illustrate only some exemplary embodiments of the present invention. Those skilled in the art can derive other drawings from these drawings without creative efforts.
FIG. 1 is a flowchart of a method for reporting a DTMF digit according to a first embodiment of the present invention;
FIG. 2 is a flowchart of a method for reporting a DTMF digit according to a second embodiment of the present invention;
FIG. 3 is a flowchart of a method for reporting a DTMF digit according to a third embodiment of the present invention;
FIG. 4 is a flowchart of a method for reporting a DTMF digit according to a fourth embodiment of the present invention;
FIG. 5 is a flowchart of a method for reporting a DTMF digit according to a fifth embodiment of the present invention;
FIG. 6 is a flowchart of a method for reporting a DTMF digit according to a sixth embodiment of the present invention;
FIG. 7 illustrates a structure of an MG according to a seventh embodiment of the present invention;
FIG. 8 illustrates a structure of another MG according to an eighth embodiment of the present invention;
FIG. 9 illustrates a structure of still another MG according to a ninth embodiment of the present invention;
FIG. 10 illustrates a structure of a system for reporting a DTMF digit according to a tenth embodiment of the present invention;
FIG. 11 illustrates a structure of another system for reporting a DTMF digit according to an eleventh embodiment of the present invention; and
FIG. 12 illustrates a structure of still another system for reporting a DTMF digit according to a twelfth embodiment of the present invention.

### DETAILED DESCRIPTION OF THE EMBODIMENTS

To better explain the technical solution of the present invention, the embodiments of the present invention are described in detail with reference to the accompanying drawings. It is apparent that the embodiments herein are only some exemplary embodiments of the present invention. Based on the embodiments herein, those skilled in the art can derive other embodiments without creative efforts and such other embodiments all fall within the protection scope of the present invention.

In the embodiments of the present invention, fixed telephones may be used for exemplary description and the present invention is not limited to thereto. A user can perform an operation, such as play, pause, fast forward, or rewind a media file through the keys on a fixed telephone. The user can also enter some requested digit information such as an identity number, a bank account number, and a password through the keys on the telephone according to a prompt. The user dials a digit through a key including 0-9, *, and # on the telephone. The telephone generates DTMF signals corresponding to the dialed digit and sends the DTMF signal to a subscriber line. The DTMF signal is transferred to the MG over a bearer path. Therefore, interactive operations on the media data are implemented. The DTMF signal sent by the user through a fixed telephone or other devices is also described as a DTMF digit. The interactive operations on media data include but are not limited to the following:
1. play announcement or prompt.
2. prompt and collect: play a prompt and collect a DTMF digit entered by the user. For example, play an announcement that prompts the user to enter a bank account number and then collect the bank account number that is entered by the user through keys on a telephone and transferred in the form of DTMF signals. In the embodiments of the present invention, the phase where the MG collects a DTMF digit entered by the user is referred to as a collection phase. A DTMF digit collected in this phase is a collected DTMF digit. The collected DTMF digit is not used for the purpose of controlling the prompt.
3. prompt and record: play a prompt and then record. For example, play an announcement that prompts the user to leave a voice message and then record the voice message of the user.

The prompt played may be a voice prompt, or a video prompt, or a mixture of voice and video. The user can control the prompt through a digit entered on the telephone or other devices. Different DTMF digits are mapped to different runtime controls, including a prompt playback control. The mapping relation may be configured in advance or set by the MGC to the MG. For example:
one DTMF digit is mapped to the fast forward key;
one DTMF digit is mapped to the rewind key;
one DTMF digit is mapped to the pause key;
one DTMF digit is mapped to the resume key;
one DTMF digit is mapped to the volume up key;
one DTMF digit is mapped to the volume down key;
one DTMF digit is mapped to the speed up key;
one DTMF digit is mapped to the speed down key; and
one DTMF digit is mapped to a certain external operation.

In the embodiments of the present invention, the phase where the user performs the runtime controls including a prompt playback control, or where the MG detects the DTMF digit that is mapped to runtime controls, is referred to as a control phase. In this phase, the DTMF digit that is detected and used for runtime controls are described as the control DTMF digit in the embodiments of the present invention. When the MG detects a control DTMF digit, the MG can perform a related control according to the mapping relation, for example, fast forwarding or rewinding a prompt. In some circumstances, the MGC needs to obtain the control DTMF digit, and therefore the MG needs to report them to the MGC.

In the embodiments of the present invention, the H.248 protocol is extended. The extended package is named "Enhanced DTMF Detection Package" and the ID of the package is "edtmf". The package may be used as an independent package or defined as an extended package of the existing DTMF Detection Package, abbreviated to the "dd" package. In the subsequent embodiments of the present invention, this package is in the form of an extended package. The package takes over the DTMF digits events of the "dd" package. The eventID of a DTMF digit detection event of the extended package is the same as the SignalID in the table described in section E5.3 of H.248.1. For example, the event d0 is used to detect the digit 0 entered by the user; and the event d1 is used to detect the digit 1 entered by the user.

In the embodiments of the present invention, an event parameter is added to the DTMF digit detection event. The parameter is named "Type" and its value may be of enumerated type, including:
0x0001 "all": report DTMF digits detected in all phases;
0x0002 "cont": report a control DTMF digit detected in the control phase;
0x0003 "coll": report a collected DTMF digit detected in the collection phase.

In the embodiments of the present invention, an ObservedEventsDescriptor Parameters parameter is added to the DTMF digit detection event. The parameter is named "Type" and its value may be of enumerated type, including:
0x0001 "all": the MG cannot identify a phase of the detected DTMF digit;
0x0002 "cont": the reported control DTMF digit is detected in the control phase;
0x0003 "coll": the reported collected DTMF digit is detected in the collection phase.

The detection event parameter may be carried in a DTMF digit detection event reported by the MG to the MGC. The default value is "all". This means, even if an event reported by the MG does not carry the parameter Type, the parameter Type is regarded as being carried with the value "all". The parameter carries the type information of the reported DTMF digit, whether the digit is a collected DTMF digit, control DTMF digit, or digit unidentifiable to the MG.

The above extension to H.248 is applicable to the detection of a single DTMF digit. The "dd" package also defines a "ce" event for DTMF digit detection in the form of a digitmap. In the embodiments of the present invention, the "edtmf" package also defines a "ce" event to extend the function of the "ce" event of the basic "dd" package.

In the embodiments of the present invention, an event parameter is added to the DTMF digit detection event, that is, the "ce" event. The parameter is named "Type" and its value may be of enumerated type, including:
0x0001 "all": report DTMF digits detected in all phases;
0x0002 "cont": report a control DTMF digit detected in the control phase;
0x0003 "coll": report a collected DTMF digit detected in the collection phase.

In the embodiments of the present invention, an ObservedEventsDescriptor Parameters parameter is added to the DTMF digit detection event. The parameter is named "Type" and its value may be of enumerated type, including:
0x0001 "all": the MG cannot identify a phase of the detected DTMF digit;
0x0002 "cont": the reported control DTMF digit is detected in the control phase;
0x0003 "coll": the reported collected DTMF digit is detected in the collection phase.

The detection event parameter may be carried in a DTMF digit detection event reported by the MG to the MGC. The default value is "all". This means, even if an event reported by the MG does not carry the parameter Type, the parameter Type is regarded as being carried with the value "all".

The two extended events in the embodiments of the present invention can be set to the MG through the MGC, or set statically on the MG. For example, the event can be set to a permanent event.

In addition, the "dd" package takes over the Start Tone Detected event, End Tone Detected event, and Long Tone Detected event of the "tonedet" package. The three events are also used in the extended "edtmf" package in the embodiments of the present invention. The event parameter Type and the detection event parameter Type can also be extended for some or all of the three events in the method mentioned above. The event parameter Type is used, when an event is set, to request the reporting of DTMF digits detected in all phases, or to request the reporting of a control DTMF digit detected in the control phase, or to request the reporting of a collected digit detected in the collection phase. The detection event parameter Type is used, when an event is reported, to indicate that the MG cannot identify the phase of the detected DTMF digit, or that the reported control DTMF digit is detected in the control phase, or that the reported collected DTMF digit is detected in the collection phase. The function of the parameter is similar to that of the DTMF digit event.

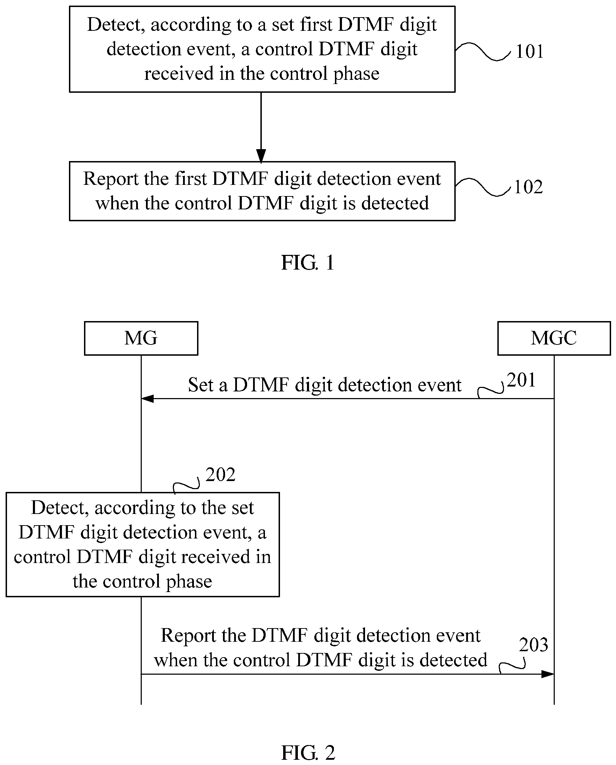

FIG. 1 is a flowchart of a method for reporting a DTMF digit according to a first embodiment of the present invention. As shown in FIG. 1, the method may include the following steps:
Step 101: Detect, according to a set first DTMF digit detection event, a control DTMF digit received in the control phase.
Step 102: Report the first DTMF digit detection event when the control DTMF digit is detected.

In the prior art, when the MGC controls the MG to enable a user to perform, through a DTMF digit, interactive operations on media data, the MG can report only the detected DTMF digit to the MGC and cannot report only the detected control DTMF digit to the MGC, so that the MGC cannot obtain the control DTMF digit only. As a result, the MGC cannot perform correct interactive operations according to the DTMF digit reported by the MG. This restricts the application scope of media services. In the first embodiment of the present invention, the MG reports the detected control DTMF digit to the MGC through the set first DTMF digit detection event. Therefore, the MG can detect the control DTMF digit and report the detected control DTMF digit to the MGC during an interactive operation on the media data. The MGC can thereby perform correct control operations according to the control DTMF digit reported by the MG. The application scope of media services is extended.

FIG. 2 is a flowchart of the method for reporting a DTMF digit according to a second embodiment of the present invention. As shown in FIG. 2, the method may include the following steps:
Step 201: The MGC instructs the MG to perform a prompt and collect operation through a "playcol" signal in an "aasdc" package defined in H.248.9 and sets the DTMF digit detection event extended in the embodiment of the present invention (the first DTMF digit detection event) for the MG.

For example, the DTMF digit detection event in this step is the "d0" event in the "edtmf" package, indicating the detection of the single DTMF digit "0", and the value of the event parameter Type is "cont". The DTMF digit detection event in this step may also be the "ce" event in the "edtmf" package, the value of the event parameter Type is "cont", and the digitmap used for DTMF digit detection is "0111213". The DTMF digit detection event in this step may also be the Start Tone Detected event or End Tone Detected event. In the subsequent embodiments of the present invention, the "Start Tone Detected" event or "End Tone Detected" event may be used as the DTMF digit detection event. The principle and application of the "Start Tone Detected" event or "End Tone Detected" event is similar to that of the DTMF digit event or "ce" event and are not further described here.

Step 202: The MG detects, according to the set DTMF digit detection event, a control DTMF digit received in the control phase.

Step 203: The MG reports the DTMF digit detection event to the MGC when the control DTMF digit is detected.

In this step, if the event set by the MGC to the MG is the "d0" event in the "edtmf" package and the MG detects the control DTMF digit "0", the DTMF digit detection event reported by the MG to the MGC is the "d0" event in the "edtmf" package and the value of the detection event parameter Type is "cont". If the event set by the MGC to the MG is the "ce" event in the "edtmf" package and the MG detects the control DTMF digit "0", the DTMF digit detection event reported by the MG to the MGC is the "ce" event in the "edtmf" package, the value of the detection event parameter Type is "cont", and the value of the parameter ds is "0". Likewise, if the event set by the MGC to the MG is the Start Tone Detected event or End Tone Detected event, the reported event carries an extended parameter Type to carry type information of the reported DTMF digit, which is not described again here.

Further, the setting of the DTMF digit detection event in step 201 in the embodiment of the present invention may be performed before or after step 201; or the DTMF digit detection event may be configured on the MG in advance and in such case, step 201 does not include the setting of the DTMF digit detection event.

In step 201, the prompt and collect operation is performed. Optionally, the prompt operation or the prompt and record operation can be performed if a control prompt can be provided.

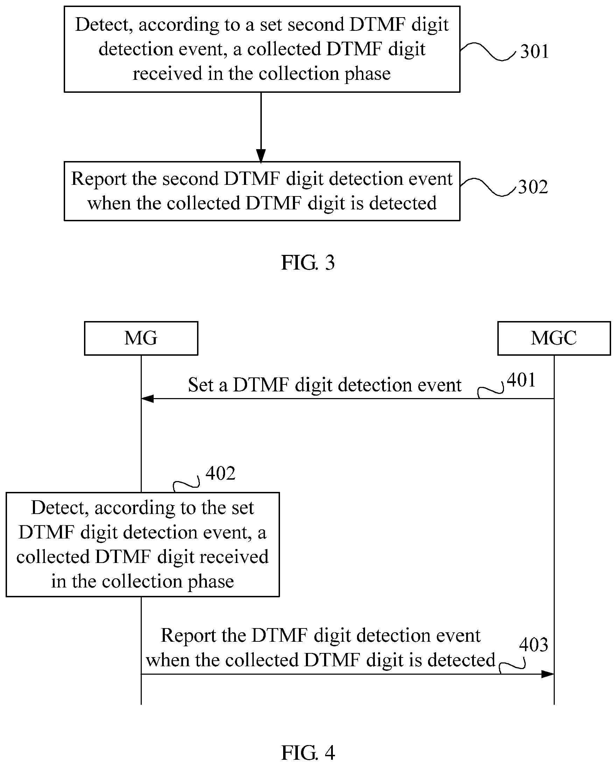

FIG. 3 is a flowchart of another method for reporting a DTMF digit according to a third embodiment of the present invention. As shown in FIG. 3, the method may include the following steps:
Step 301: Detect, according to a set second DTMF digit detection event, a collected DTMF digit received in the collection phase.
Step 302: Report the second DTMF digit detection event when the collected DTMF digit is detected.

In the prior art, when the MGC controls the MG to enable a user to perform interactive operations on media data through a DTMF digit, the MG can report only the detected DTMF digit to the MGC and cannot report only detected collected DTMF digit to the MGC, so that the MGC cannot obtain the collected DTMF digit only. As a result, the MGC cannot perform correct interactive operations according to the DTMF digit reported by the MG. This restricts the application scope of media services. In the third embodiment of the present invention, the MG reports the detected collected DTMF digit to the MGC through the set second DTMF digit detection event. Therefore, the MG can detect collected DTMF digit and report the detected collected DTMF digit to the MGC during an interactive operation on the media data. The MGC can thereby perform correct operations according to the collected DTMF digit reported by the MG. The application scope of media services is extended.

FIG. 4 is a flowchart of the other method for reporting a DTMF digit according to a fourth embodiment of the present invention. As shown in FIG. 4, the method may include the following steps:
Step 401: The MGC instructs the MG to perform a prompt and collect operation through a "playcol" signal in an "aasdc" package defined in H.248.9 and sets the DTMF digit detection event extended in the embodiment of the present invention (the second DTMF digit detection event) for the MG.

For example, the DTMF digit detection event in this step is the "d0" event in the "edtmf" package, indicating the detection of the single DTMF digit "0", and the value of the event parameter Type is "coll". The DTMF digit detection event in this step may also be the "ce" event in the "edtmf" package, the value of the event parameter Type is "coll", and the digitmap used for DTMF digit detection is "9xx".

Step 402: The MG detects, according to the set DTMF digit detection event, a collected DTMF digit received in the collection phase.

Step 403: The MG reports the DTMF digit detection event to the MGC when the collected DTMF digit is detected.

In this step, if the event set by the MGC to the MG is the "d0" event in the "edtmf" package and the MG detects the collected DTMF digit "0", the DTMF digit detection event reported by the MG to the MGC is the "d0" event in the "edtmf" package and the value of the detection event parameter Type is "coll". If the event set by the MGC to the MG is the "ce" event in the "edtmf" package and the MG detects the control DTMF digit "912", the DTMF digit detection event reported by the MG to the MGC is the "ce" event in the "edtmf" package, the value of the detection event parameter Type is "coll", and the value of the parameter ds is "912".

Further, the setting of the DTMF digit detection event in step 401 in the embodiment of the present invention can be performed before or after step 401; or the DTMF digit detection event may be configured on the MG in advance and in such case, step 401 does not include the setting of the DTMF digit detection event.

In addition, in step 401, the prompt and collect operation is performed. Optionally, other operations in the collection phase may be performed. If no operation in the collection phase is performed, event if a collected DTMF digit detection event is set, the collected DTMF digit will not be detected.

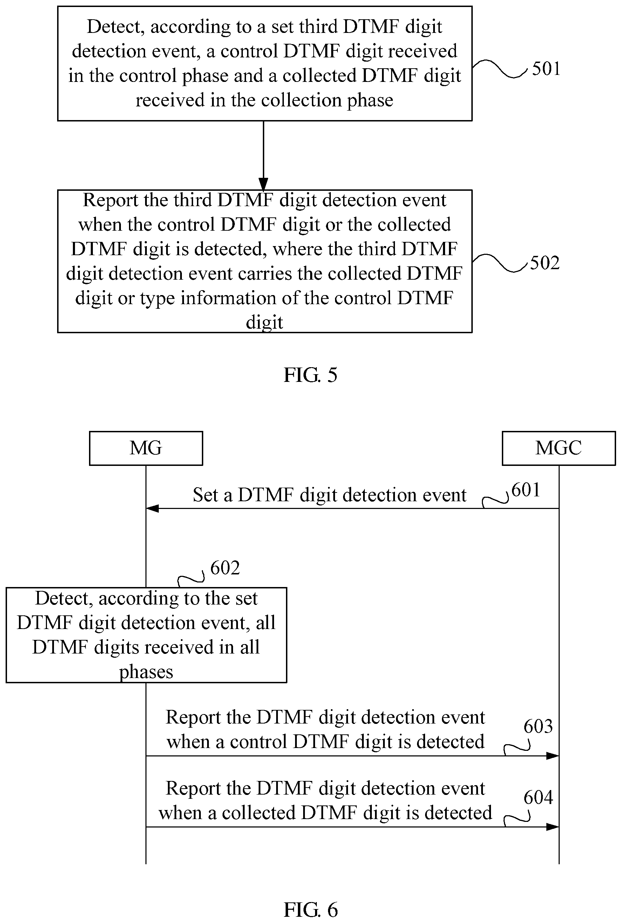

FIG. 5 is a flowchart of still another method for reporting a DTMF digit according to a fifth embodiment of the present invention. As shown in FIG. 5, the method may include the following steps:
Step 501: Detect, according to a set third DTMF digit detection event, a control DTMF digit received in the control phase and a collected DTMF digit received in the collection phase.
Step 502: Report the third DTMF digit detection event when the control DTMF digit or the collected DTMF digit is detected, where the third DTMF digit detection event carries type information of the control DTMF digit or collected DTMF digit.

In the prior art, when the MGC controls the MG to enable a user to perform interactive operations on media data through a DTMF digit, the MG can report only detected DTMF digit to the MGC and cannot report only detected control DTMF digit or only detected collected DTMF digit to the MGC, so that the MGC cannot obtain the control DTMF digit or collected DTMF digit only or determine whether the DTMF digit reported by the MG is a control DTMF digit or collected DTMF digit. As a result, the MGC cannot perform correct interactive operations according to the DTMF digit reported by the MG. This restricts the application scope of media services. In the embodiment of the present invention, the MG reports the detected control DTMF digit or collected DTMF digit to the MGC through the set third DTMF digit detection event. Therefore, the MG can detect a control DTMF digit and a collected DTMF digit and report the detected control DTMF digit and the detected collected DTMF digit to the MGC respectively during an interactive operation on the media data. The MGC can thereby perform correct interactive operations according to the control DTMF digit and collected DTMF digit reported by the MG. The application scope of media services is extended.

FIG. 6 is a flowchart of still another method for reporting a DTMF digit according to a sixth embodiment of the present invention. As shown in FIG. 6, the method may include the following steps:
Step 601: The MGC instructs the MG to perform a prompt and collect operation through a "playcol" signal in an "aasdc" package defined in H.248.9 and sets the DTMF digit detection event extended in the embodiment of the present invention (the third DTMF digit detection event) for the MG.

For example, the DTMF digit detection event in this step is the "d0" event in the "edtmf" package, indicating the detection of the single DTMF digit "0", and the value of the event parameter Type is "all". The DTMF digit detection event in this step may also be the "ce" event in the "edtmf" package, the value of the event parameter Type is "all", and the digitmap used for DTMF digit detection is "9xx".

Step 602: The MG detects, according to the set DTMF digit detection event, all DTMF digits received in all phases.

Step 603: The MG reports the DTMF digit detection event to the MGC when a control DTMF digit is detected.

In this step, if the event set by the MGC to the MG is the "d0" event in the "edtmf" package and the MG detects the control DTMF digit "0", the DTMF digit detection event reported by the MG to the MGC is the "d0" event in the "edtmf" package and the value of the detection event parameter Type is "cont". If the event set by the MGC to the MG is the "ce" event in the "edtmf" package and the MG detects the control DTMF digit "912", the DTMF digit detection event reported by the MG to the MGC is the "ce" event in the "edtmf" package, the value of the detection event parameter Type is "cont", and the value of the parameter ds is "912".

Step 604: The MG reports the DTMF digit detection event to the MGC when a collected DTMF digit is detected.

In this step, if the event set by the MGC to the MG is the "d0" event in the "edtmf" package and the MG detects the collected DTMF digit "0", the DTMF digit detection event reported by the MG to the MGC is the "d0" event in the "edtmf" package and the value of the detection event parameter Type is "coll". If the event set by the MGC to the MG is the "ce" event in the "edtmf" package and the MG detects the collected DTMF digit "999", the DTMF digit detection event reported by the MG to the MGC is the "ce" event in the "edtmf" package, the value of the detection event parameter Type is "coll", and the value of the parameter ds is "999".

Step 603 and step 604 may be inversed. That is, the sequence of the detection and reporting of a control DTMF digit and the detection and reporting of a collected DTMF digit can be inversed. Or, one of the two steps is not performed. In addition, after the detection of a DTMF digit according to a digitmap, another "ce" event must be sent to continue detecting a DTMF digit according to the digitmap.

Further, in the embodiment of the present invention, the procedure may include the following step: the MG reports a DTMF digit detection event to the MGC after detecting a DTMF digit "0". Because the MG does not know whether the DTMF digit is in the control phase or collection phase when the digit is detected, the value of the event parameter Type is "all", indicating that the MG is not aware of the phase of the DTMF digit "0" when the digit is detected. Likewise, after the MG completes the DTMF digit detection according to the digitmap, if the MG does not know the phase of the detected DTMF digit, the event parameter Type in the reported event can also be set to "all".

Further, the setting of the DTMF digit detection event in step 601 in the embodiment of the present invention can be performed before or after step 601; or the DTMF digit detection event may be configured on the MG in advance and step 601 does not include the setting of the DTMF digit detection event.

In the embodiment of the present invention, multiple of the above DTMF digit detection events set on the MG can be set simultaneously, so that a control DTMF digit and/or collected DTMF digit are detected and reported by the MG at the same time. Some digits are in the scope of both a control DTMF digit and a collected DTMF digits but are distinguished between a control DTMF digit and a collected DTMF digit because of the time (or phase) when the digits are detected. In this case, the MGC can differentiate the digits effectively according to the type information related to a DTMF digit being detected and reported which is carried in the reported event parameter Type.

For the purpose of easy description, the foregoing embodiments of the present invention are all described as a series of actions, but those skilled in the art understand that the present invention is not limited to the sequence of actions described herein. According to the present invention, some steps may be performed in other sequence or at the same time. Those skilled in the art also understand that the embodiments described herein are only some preferred embodiments of the present invention and that the actions and modules concerned are not necessarily mandatory in the present invention.

In the foregoing embodiments of the present invention, each embodiment has its emphasis. What is not detailed in one embodiment of the present invention is detailed in the related description of another embodiment.

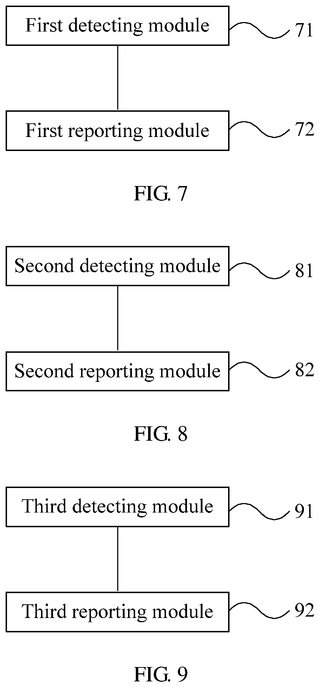

FIG. 7 illustrates an MG according to a seventh embodiment of the present invention. As shown in FIG. 7, the MG may include a first detecting module 71 and a first reporting module 72. The first detecting module 71 detects, according to a set first DTMF digit detection event, a control DTMF digit received in the control phase, and when the first detecting module 71 detects the control DTMF digit, the first reporting module 72 reports the first DTMF digit detection event.

The MG provided in the seventh embodiment of the present invention can implement the method in the first embodiment of the present invention and the function of the MG in the second embodiment of the present invention.

In the embodiment of the present invention, the first reporting module reports the detected control DTMF digit to the MGC through the set first DTMF digit detection event. Therefore, the MG can detect a control DTMF digit and report the detected control DTMF digit to the MGC during an interactive operation on media data. The MGC can thereby perform correct control operations according to the control DTMF digit reported by the MG. The application scope of media services is extended.

FIG. 8 illustrates another MG according to an eighth embodiment of the present invention. As shown in FIG. 8, the MG includes a second detecting module 81 and a second reporting module 82. The second detecting module 81 detects, according to a set second DTMF digit detection event, a DTMF digit received in the collection phase, and when the second detecting module 81 detects the collected DTMF digit, the second reporting module 82 reports the second DTMF digit detection event.

The MG provided in the eighth embodiment of the present invention can implement the method in the third embodiment of the present invention and the function of the MG in the fourth embodiment of the present invention.

In the embodiment of the present invention, the second reporting module reports the detected collected DTMF digit to the MGC through the set second DTMF digit detection event. Therefore, the MG can detect a collected DTMF digit and report the detected collected DTMF digit to the MGC during an interactive operation on media data. The MGC can thereby perform correct operations according to the collected DTMF digit reported by the MG. The application scope of media services is extended.

FIG. 9 illustrates still another MG according to a ninth embodiment of the present invention. As shown in FIG. 9, the MG includes a third detecting module 91 and a third reporting module 92. The third detecting module 91 detects, according to a set third DTMF digit detection event, a control DTMF digit received in the control phase and a collected DTMF digit received in the collection phase, and when the third detecting module 91 detects the control DTMF digit or the collected DTMF digit, the third reporting module 92 reports the third DTMF digit detection event which carries type information of the control DTMF digit or the collected DTMF digit.

The MG provided in the ninth embodiment of the present invention can implement the method in the fifth embodiment of the present invention and the function of the MG in the sixth embodiment of the present invention.

In the embodiment of the present invention, the third reporting module reports the detected control DTMF digit or collected DTMF digit to the MGC through the set third DTMF digit detection event. Therefore, the MG can detect a control DTMF digit and collected DTMF digit and report the detected control DTMF digit and the detected collected DTMF digit to the MGC respectively during an interactive operation on media data. The MGC can thereby perform correct interactive operations according to the control DTMF digit or collected DTMF digit reported by the MG. The application scope of media services is extended.

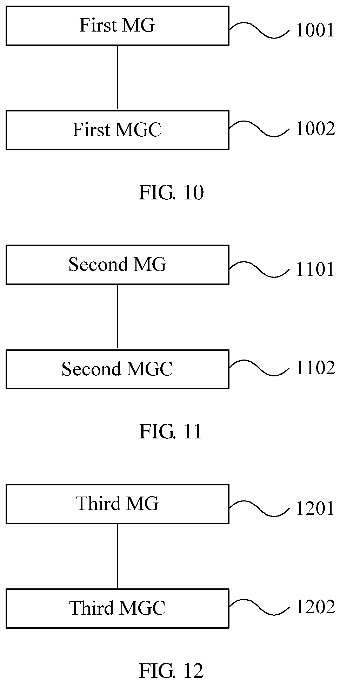

FIG. 10 illustrates a system for reporting a DTMF digit according to a tenth embodiment of the present invention. As shown in FIG. 10, the system includes a first MG 1001 and a first MGC 1002.

The first MG 1001 is adapted to detect, according to a set first DTMF digit detection event, a control DTMF digit received in the control phase and when the control DTMF digit is detected, report the first DTMF digit detection event to the first MGC 1002.

The first MGC 1002 is adapted to obtain the first DTMF digit detection event reported by the first MG 1001.

The first MG 1001 in the system for reporting DTMF digit detection events can implement the method in the first embodiment of the present invention and the functions of the MG in the second embodiment and the seventh embodiment of the present invention.

FIG. 11 illustrates another system for reporting a DTMF digit according to an eleventh embodiment of the present invention. As shown in FIG. 11, the system includes a second MG 1101 and a second MGC 1102.

The second MG 1101 is adapted to detect, according to a set second DTMF digit detection event, a collected DTMF digit received in the collection phase and when the collected DTMF digit is detected, report the second DTMF digit detection event to the second MGC 1102.

The second MGC 1102 is adapted to obtain the second DTMF digit detection event reported by the second MG 1101.

The second MG 1101 in the system for reporting DTMF digit detection events can implement the method in the third embodiment of the present invention and the functions of the MG in the fourth embodiment and the eighth embodiment of the present invention.

FIG. 12 illustrates still another system for reporting a DTMF digit according to a twelfth embodiment of the present invention. As shown in FIG. 12, the system includes a third MG 1201 and a third MGC 1202.

The third MG is adapted to detect, according to a set third DTMF digit detection event, a control DTMF digit received in the control phase and a collected DTMF digit received in the collection phase, and when the control DTMF digit or the collected DTMF digit is detected, report the third DTMF digit detection event which carries type information of the control DTMF digit or the collected DTMF digit.

The third MGC 1202 is adapted to obtain the third DTMF digit diction event reported by the third MG 1201.

The third MG 1201 in the system for reporting DTMF digit detection events can implement the method in the fifth embodiment of the present invention and the functions of the MG in the sixth embodiment and the ninth embodiment of the present invention.

Those skilled in the art understand that all or a portion of the steps in the methods of the embodiments of the present invention can be implemented by hardware under the instruction of a program. The program may be stored in a computer readable storage medium and when the program is executed, the steps in the methods of the embodiments of the present invention are executed. The storage medium may be any medium that can store program codes, such as a Read Only Memory (ROM), a Random Access Memory (RAM), a magnetic disk, or a Compact Disk-Read Only Memory (CD-ROM).

## Claims

1. A method for reporting a Dual Tone Multi-Frequency, DTMF, digit, comprising:
detecting (101), by a Media Gateway, MG, according to a set first DTMF digit detection event, a control DTMF digit received in a control phase, wherein the set first DTMF digit detection event is set by a Media Gateway Controller, MGC, for the MG; and
reporting (102), by the MG, the first DTMF digit detection event to the MGC when the control DTMF digit is detected;
wherein the reported first DTMF digit detection event carries the control DTMF digit;
wherein a value of an event parameter named "Type" carried in the set first DTMF digit detection event being "cont" indicates that the MG should report the control DTMF digit detected in the control phase, and a value of an event parameter named "Type" carried in the reported first DTMF digit detection event being "cont" indicates that the control DTMF digit is detected in the control phase.

2. The method of claim 1, wherein further comprising:
detecting (301), by the MG, according to a set second DTMF digit detection event, a collected DTMF digit received in a collection phase, wherein the set second DTMF digit detection event is set by the MGC for the MG; and
reporting (302), by the MG, the second DTMF digit detection event to the MGC when the collected DTMF digit is detected.

3. The method of claim 2, wherein the reported second DTMF digit detection event carries the collected DTMF digit.

4. The method of claim 2 or 3, wherein a value of an event parameter named "Type" carried in the set second DTMF digit detection event being "coll" indicates that the MG should report the collected DTMF digit detected in the collection phase, and a value of an event parameter named "Type" carried in the reported second DTMF digit detection event being "coll" indicates that the collected DTMF digit is detected in the collection phase.

5. The method of claim 2, wherein further comprising:
detecting (501), by the MG, according to a set third DTMF digit detection event, a control DTMF digit received in a control phase and a collected DTMF digit received in a collection phase, wherein the set third DTMF digit detection event is set by the MGC for the MG; and
reporting (502), by the MG, the third DTMF digit detection event to the MGC when the control DTMF digit or the collected DTMF digit is detected.

6. The method of claim 5, wherein a value of an event parameter named "Type" carried in the set third DTMF digit detection event being "all" indicates that the MG should report DTMF digits detected in all phases.

7. The method of claim 5, wherein the reporting, by the MG, the third DTMF digit detection event to the MGC when the control DTMF digit or the collected DTMF digit is detected comprises:
reporting, by the MG, the third DTMF digit detection event to the MGC when the control DTMF digit is detected, wherein a value of an event parameter named "Type" carried in the reported third DTMF digit detection event being "cont" indicates that the control DTMF digit is detected in the control phase; and
reporting, by the MG, the third DTMF digit detection event to the MGC when the collected DTMF digit is detected, wherein the value of the event parameter named "Type" carried in the reported third DTMF digit detection event being "coll" indicates that the collected DTMF digit is detected in the collection phase.

8. A Media Gateway, MG, comprising:
a first detecting module (71), adapted to detect, according to a set first Dual Tone Multi-Frequency, DTMF, digit detection event, a control DTMF digit received in a control phase, wherein the set first DTMF digit detection event is set by a Media Gateway Controller, MGC, for the MG; and
a first reporting module (72), adapted to report the first DTMF digit detection event to the MGC when the control DTMF digit is detected, wherein the reported first DTMF digit detection event carries the control DTMF digit;
wherein a value of an event parameter named "Type" carried in the set first DTMF digit detection event being "cont" indicates that the MG should report the control DTMF digit detected in the control phase, and a value of an event parameter named "Type" carried in the reported first DTMF digit detection event being "cont" indicates that the control DTMF digit is detected in the control phase.

9. The Media Gateway of claim 8, wherein further comprising:
a second detecting module (81), adapted to detect, according to a set second DTMF digit detection event, a collected DTMF digit received in a collection phase, wherein the set second DTMF digit detection event is set by the MGC for the MG; and
a second reporting module (82), adapted to report the second DTMF digit detection event to the MGC when the collected DTMF digit is detected.

10. The Media Gateway of claim 9, wherein further comprising:
a third detecting module (91), adapted to detect, according to a set third DTMF digit detection event, a control DTMF digit received in a control phase and a collected DTMF digit received in a collection phase, wherein the set third DTMF digit detection event is set by the MGC for the MG; and
a third reporting module (92), adapted to report the third DTMF digit detection event to the MGC when the control DTMF digit or the collected DTMF digit is detected.

11. A system for reporting a Dual Tone Multi-Frequency, DTMF, digit, comprising a Media Gateway, MG according to any one of the claims 8-10, and a Media Gateway Controller, MGC.

## Patentansprüche

1. Verfahren zum Melden einer Doppeltonmehrfrequenz(DTMF)-Ziffer, das Folgendes umfasst:
Detektieren (101) durch ein Mediengateway, MG, gemäß einem eingestellten ersten DTMF-Zifferndetektionsereignis einer DTMF-Steuerziffer, die in einer Steuerphase empfangen wurde, wobei das eingestellte erste DTMF-Zifferndetektionsereignis von einer Mediengatewaysteuerung, MGC, für das MG eingestellt wird; und
Melden (102) des ersten DTMF-Zifferndetektionsereignisses durch das MG an die MGC, wenn die DTMF-Steuerziffer detektiert wird;
wobei das gemeldete erste DTMF-Zifferndetektionsereignis die DTMF-Steuerziffer enthält;
wobei ein Wert "cont" eines Ereignisparameters mit dem Namen "Typ", der im eingestellten ersten DTMF-Zifferndetektionsereignis enthalten ist, anzeigt, dass das MG die in der Steuerphase detektierte DTMF-Steuerziffer melden sollte, und ein Wert "cont" eines Ereignisparameters mit dem Namen "Typ", der im gemeldeten ersten DTMF-Zifferndetektionsereignis enthalten ist, anzeigt, dass die DTMF-Steuerziffer in der Steuerphase detektiert wurde.

2. Verfahren nach Anspruch 1, wobei es ferner Folgendes umfasst:
Detektieren (301) durch das MG gemäß einem eingestellten zweiten DTMF-Zifferndetektionsereignis einer gesammelten DTMF-Ziffer, die in einer Sammelphase empfangen wurde, wobei das eingestellte zweite DTMF-Zifferndetektionsereignis von der MGC für das MG eingestellt wird; und
Melden (302) des zweiten DTMF-Zifferndetektionsereignisses durch das MG an die MGC, wenn die gesammelte DTMF-Ziffer detektiert wird.

3. Verfahren nach Anspruch 2, wobei das gemeldete zweite DTMF-Zifferndetektionsereignis die gesammelte DTMF-Ziffer enthält.

4. Verfahren nach Anspruch 2 oder 3, wobei ein Wert "coll" eines Ereignisparameters mit dem Namen "Typ", der im eingestellten zweiten DTMF-Zifferndetektionsereignis enthalten ist, anzeigt, dass das MG die in der Sammelphase detektierte DTMF-Steuerziffer melden sollte, und ein Wert "coll" eines Ereignisparameters mit dem Namen "Typ", der im gemeldeten zweiten DTMF-Zifferndetektionsereignis enthalten ist, anzeigt, dass die DTMF-Steuerziffer in der Sammelphase detektiert wurde.

5. Verfahren nach Anspruch 2, wobei es ferner Folgendes umfasst:
Detektieren (501) durch das MG gemäß einem eingestellten dritten DTMF-Zifferndetektionsereignis einer DTMF-Steuerziffer, die in einer Steuerphase empfangen wurde, und einer gesammelten DTMF-Ziffer, die in einer Sammelphase empfangen wurde, wobei das eingestellte dritte DTMF-Zifferndetektionsereignis von der MGC für das MG eingestellt wird; und
Melden (502) des dritten DTMF-Zifferndetektionsereignisses durch das MG an die MGC, wenn die DTMF-Steuerziffer oder die gesammelte DTMF-Ziffer detektiert wird.

6. Verfahren nach Anspruch 5, wobei ein Wert "all" eines Ereignisparameters mit dem Namen "Typ", der im eingestellten dritten DTMF-Zifferndetektionsereignis enthalten ist, anzeigt, dass das MG in allen Phasen detektierte DTMF-Ziffern melden sollte.

7. Verfahren nach Anspruch 5, wobei das Melden des dritten DTMF-Zifferndetektionsereignisses durch das MG an die MGC, wenn die DTMF-Steuerziffer oder die gesammelte DTMF-Ziffer detektiert wird, Folgendes umfasst:
Melden des dritten DTMF-Zifferndetektionsereignisses durch das MG an die MGC, wenn die DTMF-Steuerziffer detektiert wird, wobei ein Wert "cont" eines Ereignisparameters mit dem Namen "Typ", der im gemeldeten dritten DTMF-Zifferndetektionsereignis enthalten ist, anzeigt, dass die DTMF-Steuerziffer in der Steuerphase detektiert wurde; und
Melden des dritten DTMF-Zifferndetektionsereignisses durch das MG an die MGC, wenn die gesammelte DTMF-Ziffer detektiert wird, wobei der Wert "coll" des Ereignisparameters mit dem Namen "Typ", der im gemeldeten dritten DTMF-Zifferndetektionsereignis enthalten ist, anzeigt, dass die gesammelte DTMF-Ziffer in der Sammelphase detektiert wurde.

8. Mediengateway, MG, das Folgendes umfasst:
ein erstes Detektionsmodul (71), das angepasst ist, gemäß einem eingestellten ersten Doppeltonmehrfrequenz(DTMF)-Zifferndetektionsereignis eine DTMF-Steuerziffer, die in einer Steuerphase empfangen wurde, zu detektieren wobei das eingestellte erste DTMF-Zifferndetektionsereignis von einer Mediengatewaysteuerung, MGC, für das MG eingestellt wird; und
ein erstes Meldemodul (72), das angepasst ist, das erste DTMF-Zifferndetektionsereignis an die MGC zu melden, wenn die DTMF-Steuerziffer detektiert wird, wobei das gemeldete erste DTMF-Zifferndetektionsereignis die DTMF-Steuerziffer enthält;
wobei ein Wert "cont" eines Ereignisparameters mit dem Namen "Typ", der im eingestellten ersten DTMF-Zifferndetektionsereignis enthalten ist, anzeigt, dass das MG die in der Steuerphase detektierte DTMF-Steuerziffer melden sollte, und ein Wert "cont" eines Ereignisparameters mit dem Namen "Typ", der im gemeldeten ersten DTMF-Zifferndetektionsereignis enthalten ist, anzeigt, dass die DTMF-Steuerziffer in der Steuerphase detektiert wurde.

9. Mediengateway nach Anspruch 8, wobei es ferner Folgendes umfasst:
ein zweites Detektionsmodul (81), das angepasst ist, gemäß einem eingestellten zweiten DTMF-Zifferndetektionsereignis eine gesammelte DTMF-Ziffer, die in einer Sammelphase empfangen wurde, zu detektieren, wobei das eingestellte zweite DTMF-Zifferndetektionsereignis von der MGC für das MG eingestellt wird; und
ein zweites Meldemodul (82), das angepasst ist, das zweite DTMF-Zifferndetektionsereignis an die MGC zu melden, wenn die gesammelte DTMF-Ziffer detektiert wird.

10. Mediengateway nach Anspruch 9, wobei es ferner Folgendes umfasst:
ein drittes Detektionsmodul (91), das angepasst ist, gemäß einem eingestellten dritten DTMF-Zifferndetektionsereignis eine DTMF-Steuerziffer, die in einer Steuerphase empfangen wurde, und eine gesammelte DTMF-Ziffer, die in einer Sammelphase empfangen wurde, zu detektieren, wobei das eingestellte dritte DTMF-Zifferndetektionsereignis von der MGC für das MG eingestellt wird; und
ein drittes Meldemodul (92), das angepasst ist, das dritte DTMF-Zifferndetektionsereignis an die MGC zu melden, wenn die DTMF-Steuerziffer oder die gesammelte DTMF-Ziffer detektiert wird.

11. System zum Melden einer Doppeltonmehrfrequenz(DTMF)-Ziffer, das ein Mediengateway, MG nach einem der Ansprüche 8-10 und eine Mediengatewaysteuerung, MGC, umfasst.

## Revendications

1. Procédé pour rapporter un chiffre double tonalité multifréquence, DTMF, comprenant :
la détection (101), par une passerelle multimédia, MG, en fonction d'un premier événement de détection de chiffre DTMF défini, d'un chiffre DTMF de commande reçu dans une phase de commande, le premier événement de détection de chiffre DTMF défini étant défini par un contrôleur de passerelle multimédia, MGC, pour la MG ; et
le rapport (102), par la MG, du premier événement de détection de chiffre DTMF au MGC lorsque le chiffre DTMF de commande est détecté :
le premier événement de détection de chiffre DTMF rapporté portant le chiffre DTMF de commande ;
une valeur d'un paramètre d'événement nommé "Type" portée dans le premier événement de détection de chiffre DTMF défini étant "cont" indiquant que la MG doit rapporter le chiffre DTMF de commande détecté dans la phase de commande, et une valeur d'un paramètre d'événement nommé "Type" portée dans le premier événement de détection de chiffre DTMF rapporté étant "cont" indiquant que le chiffre DTMF de commande est détecté dans la phase de commande.

2. Procédé selon la revendication 1, comprenant en outre :
la détection (301), par la MG, en fonction d'un deuxième événement de détection de chiffre DTMF défini, d'un chiffre DTMF recueilli reçu dans une phase de collecte, le deuxième événement de détection de chiffre DTMF défini étant défini par le MGC pour la MG ; et
le rapport (302), par la MG, du deuxième événement de détection de chiffre DTMF au MGC lorsque le chiffre DTMF recueilli est détecté.

3. Procédé selon la revendication 2, le deuxième événement de détection de chiffre DTMF rapporté portant le chiffre DTMF recueilli.

4. Procédé selon la revendication 2 ou 3, une valeur d'un paramètre d'événement nommé "Type" portée dans le deuxième événement de détection de chiffre DTMF défini étant "coll" indiquant que la MG doit rapporter le chiffre DTMF recueilli détecté dans la phase de collecte, et une valeur d'un paramètre d'événement nommé "Type" portée dans le deuxième événement de détection de chiffre DTMF rapporté étant "coll" indiquant que le chiffre DTMF recueilli est détecté dans la phase de collecte.

5. Procédé selon la revendication 2, comprenant en outre :
la détection (501), par la MG, en fonction d'un troisième événement de détection de chiffre DTMF défini, d'un chiffre DTMF de commande reçu dans une phase de commande et d'un chiffre DTMF recueilli reçu dans une phase de collecte, le troisième événement de détection de chiffre DTMF défini étant défini par le MGC pour la MG ; et
le rapport (502), par la MG, du troisième événement de détection de chiffre DTMF au MGC lorsque le chiffre DTMF de commande ou le chiffre DTMF recueilli est détecté.

6. Procédé selon la revendication 5, une valeur d'un paramètre d'événement nommé "Type" portée dans le troisième événement de détection de chiffre DTMF défini étant "all", indiquant que la MG doit rapporter les chiffres DTMF détectés dans toutes les phases.

7. Procédé selon la revendication 5, le rapport, par la MG, du troisième événement de détection de chiffre DTMF au MGC lorsque le chiffre DTMF de commande ou le chiffre DTMF recueilli est détecté comprenant :
le rapport, par la MG, du troisième événement de détection de chiffre DTMF au MGC lorsque le chiffre DTMF de commande est détecté, une valeur d'un paramètre d'événement nommé "Type" portée dans le troisième événement de détection de chiffre DTMF rapporté étant "cont" indiquant que le chiffre DTMF de commande est détecté pendant la phase de commande ; et
le rapport, par la MG, du troisième événement de détection de chiffre DTMF au MGC lorsque le chiffre DTMF recueilli est détecté, la valeur du paramètre d'événement nommé "Type" portée dans le troisième événement de détection de chiffre DTMF rapporté étant "coll" indiquant que le chiffre DTMF recueilli est détecté pendant la phase de collecte.

8. Passerelle multimédia, MG, comprenant :
un premier module de détection (71), adapté pour détecter, en fonction d'un premier événement de détection de chiffre défini double tonalité multifréquences, DTMF, un chiffre DTMF de commande reçu dans une phase de commande, le premier événement de détection de chiffre DTMF défini étant défini par un contrôleur de passerelle multimédia, MGC, pour le MG ; et
un premier module de rapport (72), adapté pour rapporter le premier événement de détection de chiffre DTMF au MGC lorsque le chiffre DTMF de commande est détecté, le premier événement de détection de chiffre DTMF rapporté portant le chiffre DTMF de commande ;
une valeur d'un paramètre d'événement nommé "Type" portée dans le premier événement de détection de chiffre DTMF défini étant "cont" indiquant que la MG doit rapporter le chiffre DTMF de commande détecté dans la phase de commande, et une valeur d'un paramètre d'événement nommé "Type" portée dans le premier événement de détection de chiffre DTMF rapporté étant "cont" indiquant que le chiffre DTMF de commande est détecté dans la phase de commande.

9. Passerelle multimédia selon la revendication 8, comprenant en outre :
un deuxième module de détection (81), adapté pour détecter, en fonction d'un deuxième événement de détection de chiffre DTMF défini, un chiffre DTMF recueilli reçu dans une phase de collecte, le deuxième événement de détection de chiffre DTMF défini étant défini par le MGC pour le MG ; et
un deuxième module de rapport (82), adapté pour rapporter le deuxième événement de détection de chiffre DTMF au MGC lorsque le chiffre DTMF recueilli est détecté.

10. Passerelle multimédia selon la revendication 9, comprenant en outre :
un troisième module de détection (91), adapté pour détecter, en fonction d'un troisième événement de détection de chiffre DTMF défini, un chiffre DTMF de commande reçu dans une phase de commande et un chiffre DTMF recueilli reçu dans une phase de collecte, le troisième événement de détection de chiffre DTMF défini étant défini par le MGC pour le MG ; et
un troisième module de rapport (92), adapté pour rapporter le troisième événement de détection de chiffre DTMF au MGC lorsque le chiffre DTMF de commande ou le chiffre DTMF recueilli est détecté.

11. Système pour rapporter un chiffre double tonalité multifréquence, DTMF, comprenant une passerelle multimédia, MG selon l'une quelconque des revendications 8 à 10, et un contrôleur de passerelle multimédia, MGC.
